# EUROPEAN PATENT APPLICATION

(11) **EP 4 791 069 A1**
(43) Date of publication of application: **12.08.2026**
(21) Application number: 25156669.1
(22) Date of filing: 07.02.2025
(51) Int. Cl.: H04W 24/08, H04L 5/00

(54) **MANAGEMENT OF REFERENCE SIGNAL RESOURCES**

(71) Applicant: Nokia Technologies Oy, 02610 Espoo (FI)
(72) Inventor: Sanguanpuak, Tachporn, 90650 Oulu (FI); Gold, Dimitri, 02610 Espoo (FI); Jayasinghe Laddu, Keeth, 02610 Espoo (FI); Syed Muhammad, Fahad, 91620 Nozay (FR)
(74) Representative: Swindell & Pearson Limited

(57) **Abstract**

Examples of the disclosure relate to management of reference signal resources. Performance measurements are performed for a model that is used for reference signal resource predictions. The measurements are performed based on configured reference signals. The performance measurements are performed over a monitoring period. At least one output of the performance measurements is reported. The output is reported within the monitoring period. The output of the performance measurements provides at least an indication of the accuracy of the model that is used for reference signal resource predictions.

## Description

### TECHNOLOGICAL FIELD

Examples of the disclosure relate to management of reference signal resources. Some relate to management of reference signal resources such as beams

### BACKGROUND

In communication networks models such as artificial intelligence (Al) or machine learning (ML) models can be used to predict reference signal resources such as beams.

### BRIEF SUMMARY

According to various, but not necessarily all, examples of the disclosure there is provided an apparatus comprising:
at least one processor;
and at least one memory storing instructions that, when executed by the at least one processor, cause the apparatus to perform at least:
   performing performance measurements for a model that is used for reference signal resource predictions wherein the measurements are performed based on configured reference signals and wherein the performance measurements are performed over a monitoring period; and
   reporting at least one output of the performance measurements wherein the output is reported within the monitoring period and the output of the performance measurements provide at least an indication of the accuracy of the model that is used for reference signal resource predictions.

The configured reference signals may comprise at least one of:
Channel state information (CSI) - reference signals
Synchronization signal blocks (SSB).

The performance measurements may comprise layer 1 -reference signal received power (L1-RSRP) measurements.

The at least one processor and at least one memory may also be configured to cause the apparatus to perform calculating at least one monitoring metric based on the configured reference signals.

The at least one monitoring metric may comprise at least one of:
prediction accuracy;
L1-RSRP difference.

The reporting of at least one output of the performance measurements may comprise reporting the at least one monitoring metric.

The at least one processor and at least one memory may also be configured to cause the apparatus to perform determining an occurrence of an event based on the monitoring metric and reporting the occurrence of the event within the monitoring period.

The at least one processor and at least one memory may also be configured to cause the apparatus to perform evaluating whether a performance metric of the model used for reference signal resource prediction falls below a threshold within an evaluation time period.

The at least one processor and at least one memory may also be configured to cause the apparatus to perform notifying higher protocol layers within the apparatus if the performance metric falls below the threshold in the evaluation time period and wherein the notification is made within the evaluation time period.

The at least one processor and at least one memory may also be configured to cause the apparatus perform controlling reference signal resource selection based on the notification.

The least one processor and at least one memory may also be configured to cause the apparatus to perform sending the output of the performance measurements to a network entity to enable the network entity to perform evaluating whether a performance metric of the model used for reference signal resource prediction falls below a threshold within an evaluation time period.

The evaluation of the performance metric may be performed based at least on an output of the model and the configured reference signals.

The one or more reference signal resources may be dynamically muted and unmuted to enable testing of the evaluation of the performance metric.

The reference signal resource predictions may comprise beam predictions.

According to various, but not necessarily all, examples of the disclosure there is provided a method comprising:
performing performance measurements for a model that is used for reference signal resource predictions wherein the measurements are performed based on configured reference signals and wherein the performance measurements are performed over a monitoring period; and
reporting at least one output of the performance measurements wherein the output is reported within the monitoring period and the output of the performance measurements provide at least an indication of the accuracy of the model that is used for reference signal resource predictions.

According to various, but not necessarily all, examples of the disclosure there is provided a computer program comprising computer program instructions for causing an apparatus to perform at least the following or for performing at least the following:
performing performance measurements for a model that is used for reference signal resource predictions wherein the measurements are performed based on configured reference signals and wherein the performance measurements are performed over a monitoring period; and
reporting at least one output of the performance measurements wherein the output is reported within the monitoring period and the output of the performance measurements provide at least an indication of the accuracy of the model that is used for reference signal resource predictions.

According to various, but not necessarily all, embodiments there is provided an apparatus comprising:
at least one processor; and
at least one memory;
the at least one memory storing instructions that, when executed by the at least one processor, cause the apparatus to perform at least a part of one or more methods described herein.

According to various, but not necessarily all, embodiments there is provided an apparatus comprising means for performing at least part of one or more methods described herein. The description of a function and/or action should additionally be considered to also disclose any means suitable for performing that function and/or action. Functions and/or actions described herein can be performed in any suitable way using any suitable method.

According to various, but not necessarily all, embodiments there is provided examples as claimed in the appended claims.

While the above examples of the disclosure and optional features are described separately, it is to be understood that their provision in all possible combinations and permutations is contained within the disclosure. It is to be understood that various examples of the disclosure can comprise any or all the features described in respect of other examples of the disclosure, and vice versa. Also, it is to be appreciated that any one or more or all the features, in any combination, may be implemented by/comprised in/performable by an apparatus, a method, and/or instructions as desired, and as appropriate. The description of a function should additionally be considered to also disclose any means suitable for performing that function

### BRIEF DESCRIPTION

Some examples will now be described with reference to the accompanying drawings in which:
FIG. 1 shows an example network;
FIG. 2 shows an example of measurement reporting;
FIG. 3 shows an example method;
FIG. 4 shows an example of a monitoring period;
FIG.5 shows an example of a monitoring period;
FIG. 6 shows an example of event based reporting; and
FIG. 7 shows an example controller.

The figures are not necessarily to scale. Certain features and views of the figures can be shown schematically or exaggerated in scale in the interest of clarity and conciseness. For example, the dimensions of some elements in the figures can be exaggerated relative to other elements to aid explication. Corresponding reference numerals are used in the figures to designate corresponding features. For clarity, all reference numerals are not necessarily displayed in all figures.

### DEFINITIONS

- AI: Artificial Intelligence
- AP: Aperiodic
- CSI: Channel State Information
- DCI: Downlink Control Information
- DL: Downlink
- FR2: Frequency Range 2
- L1-RSRP: Layer 1 Received Signal Reference Power
- ML: Machine Learning
- PDCCH: Physical Downlink Control Channel
- PDSCH: Physical Downlink Shared Channel
- PUSCH: Physical Uplink Shared Channel
- PUCCH: Physical Uplink Control Channel
- RRC: Radio Resource Channel
- RS: Reference Signal
- RSRP: Received Signal Reference Power
- SSB: Synchronization Signal Blocks
- UE: User Equipment

### DETAILED DESCRIPTION

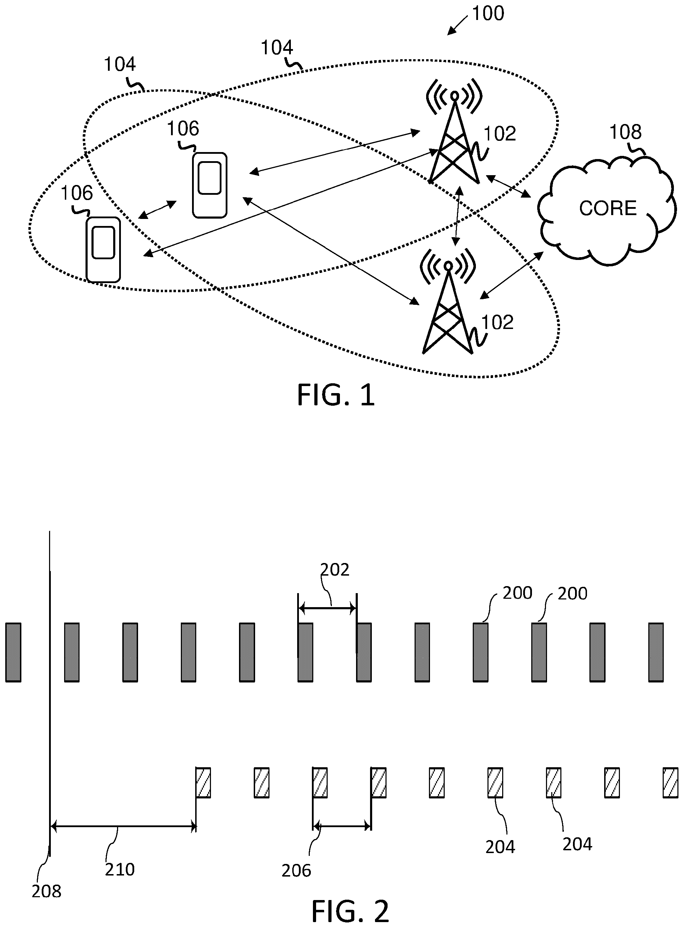

Fig. 1 illustrates an example of a communication network 100 to which examples of the disclosure can be applied. The communication network 100 is a cellular communication network. The communication network comprises network access nodes 102. The network access nodes 102 provide one or more cells 104. The cells 104 may define a coverage area or a service area of the corresponding network access node 102.

The network access nodes 102 can provide one or more user equipments (UE) 106 with wireless access to the communication network. The wireless access may comprise downlink (DL) communication from the network access node 102 to the UE 106 and uplink (UL) communication from the UE 106 to the network access node 102. Examples of uplink channels comprise physical uplink control channel (PUCCH) for transmitting control information and physical uplink shared channel (PUSCH) for transmitting data towards the network access nodes 102. Examples of downlink channels comprise physical downlink control channel (PDCCH) for transmitting control information and physical downlink shared channel (PDSCH) for transmitting data towards the UE 106.

There may be a plurality of UEs 106 in the network 100. Respective UEs 106 can be served by the same or by different network access nodes 102.

If the communication network 100 comprises multiple network access nodes 102 the network access nodes 102 can be connected to each other via an interface. LTE specifications refer to such an interface as an X2 interface. An interface between an LTE node and a 5G node, or between two 5G nodes can be called an Xn interface.

The network access nodes 102 can be further connected via another interface to a core network 108 of the communication network 100. The core network 108 can comprise core network nodes. The LTE specifications specify the core network as an evolved packet core (EPC), and the core network may comprise such as a mobility management entity (MME) and a gateway node. The MME may handle mobility of terminal devices in a tracking area encompassing a plurality of cells and handle signalling connections between terminal devices such as the UEs 106 and the core network 108. The gateway node may handle data routing in the core network 108 and to/from terminal devices such as the UEs 106. The 5G specifications specify the core network as a 5G core (5GC). The 5G core may comprise, for example, an access and mobility management function (AMF) and a user plane function/gateway (UPF) and other functions. The AMF may handle termination of non-access stratum (NAS) signalling, NAS ciphering & integrity protection, registration management, connection management, mobility management, access authentication and authorization, security context management. The UPF node may support packet routing and forwarding, packet inspection and quality of service (QoS) handling, for example. In other types of network other types of entities can be provided within the core network 108.

In communication networks 100 models such as artificial intelligence (Al) or machine learning (ML) models can be used to predict reference signal resources. The reference signal resources could comprise beams or any other resources that are used for communication between a UE 106 and a network access node 102.

There are different use cases for predicting reference signal resources. A first use case is spatial domain prediction. For spatial domain the predictions are based on a set of measurements that does not contain historical information. A second use case is time domain prediction. For time domain prediction the predictions are based on a set of measurements that do contain historical information.

For beam prediction the measurements and predictions can be based on two beam sets. Set A is the complete set of beams over which the prediction will operate. Set B is the set of beams whose measurements will be inputted to the model. Set B could comprise layer 1 reference signal received power (L1-RSRP) or any other suitable beams. Set B can be different from Set A (for space-domain and time-domain prediction) or could be a subset of Set A (for space-domain and time-domain prediction) or could be the same as Set A (for time-domain prediction).

To enable models to be used to predict reference signal resources measurement results need to be obtained and reported to the network 100.

Fig. 2 schematically shows an example of measurement reporting in cases where a model such as an AI/ML model is not used.

RS (reference signal) measurements 200 are made at regular intervals. The time period 202 between successive RS measurements 200 is the RS periodicity.

The measurement reports 204 occur after each RS measurement 200. The time period 206 between successive measurement reports 206 is the reporting periodicity.

A new RS can be identified as indicated at time 208 in Fig. 2. When a new RS is identified the first measurement report 204 relating to the new RS is sent within a defined time period. The defined time period in this example is a measurement period 210. The measurement period 210 can comprise multiple instances of RS measurements.

In examples where a model is used for reference signal resource prediction the UE 106 can be arranged to perform measurements and provide a report to the network 100 or to a higher level within the UE 106. The report can provide an indication of the accuracy of the model that is used for the predictions. In such cases a time period is defined between the activation of the model and the first performance report.

Examples of the disclosure provide methods and systems for reporting performance reports from a UE 106 to the network 100 or to a higher level within the UE 106. Examples of the disclosure can also provide methods and systems for determining if an event, such as failure of the model or failure of features or functionality of the model has occurred and reporting of any such event. Examples of the disclosure can also provide methods and systems for testing the efficiency with which the reports are provided by the UE 106.

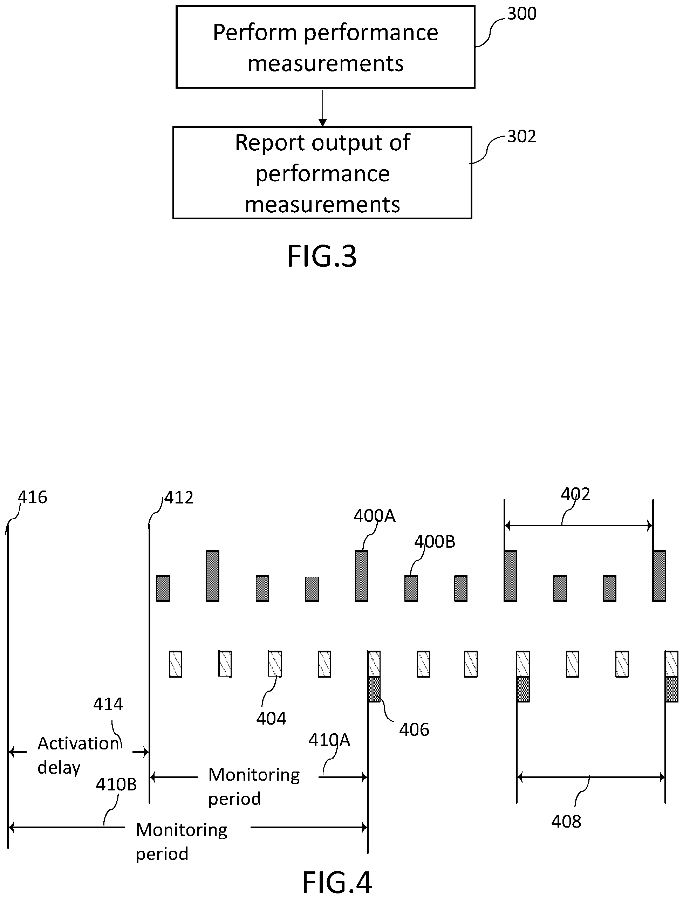

Fig. 3 shows an example method according to examples of the disclosure. The methods could be implemented by a UE 106 or by any other suitable means.

The method could be implemented in communication networks 100 such as those shown in Fig. 1 or in any other suitable types of networks 100. In some examples the network 100 can be arranged to send configured refence signals to the UE 106 to enable the UE to perform performance measurements. The configured refence signals could be sent from an access node 102 or any other suitable network entity.

At block 300 the method comprises performing performance measurements for a model that is used for reference signal resource predictions. The model can be an AI/ML model or any other suitable type of model. The model can be implemented by the network 100 or any other suitable entity. The model might not be visible or distinguishable to the UE 106 but the UE 106 can be aware of the functionality or features provided by the model. The performance measurements can therefore be a measure of the functionality or features of the model. The functionality of the model can be CSI-ReportConfig configured for inference operation

The reference signal resource predictions can comprise beam predictions or predictions for any other suitable resources.

The performance measurements are performed based on configured reference signals. The configured reference signals can comprise Channel state information (CSI) - reference signals, synchronization signal blocks (SSB), or any other suitable reference signals.

The performance measurements can comprise any suitable measurements that enable the performance of the model to be evaluated. In some examples the performance measurements can comprise layer 1 -reference signal received power (L1-RSRP) measurements. The performance measurements could be based on a comparison for K best resources or could be based on any other suitable factors or combinations of factors.

The performance measurements are performed over a monitoring period T-_Mon_Period.

At block 302 the method comprises reporting at least one output of the performance measurements. The output is reported within the monitoring period T Mon_Period.

The output can be reported to the network 100 or to a higher protocol layer within the UE 106.

The output of the performance measurements provide at least an indication of the accuracy of the model that is used for reference signal resource predictions. The output of the performance measurements can provide an indication of the accuracy of the features or functionality provided by the model.

In some examples the output of the performance measurements can be reported using a monitoring metric. The monitoring metric can be used for performance monitoring. The monitoring metric can provide an indication of the accuracy of the model. The monitoring metric can provide an indication of the features or functionality provided by the model. The monitoring metric can be calculated based on the configured reference signals. In some examples, the monitoring metric can be calculated by the UE 106.

Examples of monitoring metrics that can be used in examples of the disclosure can comprise:
- Top 1 or Top K beam prediction accuracy (with or without margin) by comparing the prediction results and the Top-1 or Top-K beam based on the measurements from a resource set/resource for monitoring
- The L1-RSRP difference based on actual measurement of the L1-RSRP of one or more of Top K predicted beam, and L1-RSRP measurements from a resource set/resource for monitoring

Other monitoring metrics could be used in other examples.

In some examples, the UE 106 can be arranged to determine an occurrence of an event based on the monitoring metric and report the occurrence of the event. The occurrence of the event can be determined and reported within the monitoring period. The event could be failure of the model or failure of the features or functionality of the model or any other suitable event.

In some examples, the UE 106 can be arranged to evaluate a performance metric. A performance metric can comprise an indication of whether a performance metric of the model used for reference signal resource prediction falls below a threshold Qₘₒₙ within an evaluation time period T_{eval_mon_out}. For example, the performance metric could comprise an indication of whether the monitoring metric has fallen below the threshold Qₘₒₙ for a determined number of occasions within the evaluation time period T-_{eval_mon_out}. The UE 106 could report the performance metric to the network 100 or could use the performance metric to determine the occurrence of an event and report the event to the network 100.

The UE 106 can be configured to notify higher protocol layers within the UE 106 if the evaluated performance metric falls below the threshold within the evaluation time period. The notification to the higher protocol layer can be made within the evaluation time period.

In other examples the UE 106 can send the output of the performance measurements to a network entity to enable the network entity to evaluate the performance metric. The network entity could be an access node 102 or any other suitable entity within the network 100. The evaluation of the performance metrics can be performed based on one or more outputs of the model and the configured reference signals.

In some examples the UE 106 can be arranged to enable testing of the performance measurements and/or the reporting of the performance measurements and/or the evaluations of the performance metric. To enable the testing the network 100 can be arranged to dynamically control muting and unmuting of one or more reference signal resources.

In some examples the outputs of the performance measurements can used to control reference signal resource selection. For example, the reference signal resources could comprise beams and the UE 106 could be configured to control selection of beams, activation of beams, deactivation of beans, switching of beams or falling back to legacy modes of beam selection. Falling back to legacy modes of beam selection can comprise stopping use the model for reference signal resource selection. In some examples the decisions relating to the control of the reference signal resources could be made by the UE 106. For instance, if the UE 106 provides the performance measurement reports to the higher protocol layer the UE 106 can use this information to control the reference signal resource selection. In some examples the decisions relating to the control of the reference signal resources could be made by the network 100. For instance, if the UE 106 provides the performance measurement reports to the network, the network 100 can use this information to control the reference signal resource selection.

If the model is deactivated then the network 100 can stop sending the monitoring RS or could configured a different RS.

Fig. 4 schematically shows an example of a monitoring period in cases where a model such as an AI/ML model is used. In this example the UE 106 reports the performance measurements directly to the network 100. The network 100 can then use the reported performance measurements to calculate a monitoring metric. The network 100 could also use the monitoring metric, or any other suitable parameter or metric to determine a performance metric. Based on the performance metric or other information obtained from the reported performance measurements the network 100 can make a decision such as selection of beams, activation of beams, deactivation of beans, switching of beams or falling back to legacy modes of beam selection or any other suitable decision. The network 100 could communicate any such decisions to the UE 106.

The monitoring is triggered at time 416. The monitoring can be triggered by the activation of a model, the indication of the RS, explicit monitoring activation or by any other suitable trigger.

As shown in Fig. 4 the performance measurements 404 are made at regular intervals. The performance measurements 404 are made based on configured RS 400. The RS can be set A 400A or set B 400B. The time period between successive Set A RS 400A is the monitoring RS periodicity 402.

The performance measurements 404 can be made after each RS 400. The performance measurements 404 are made based on the RS 400.

A monitoring report 406 is sent from the UE 106 to the network 100. The monitoring report 406 can be compiled based on the performance measurements 404. The monitoring report 406 can be compiled based on multiple instances of the performance measurements 404. The time period between successive monitoring reports 406 is the reporting periodicity 408.

The monitoring report can comprise an indication of the accuracy of the model or of the accuracy of features or functionality provided by the model.

Different examples of a monitoring period 410 are indicated in Fig. 4. The monitoring period T_{_Mon_Period} is the time interval over which the model is monitored and the performance measurements are made. The report of the performance measurements can be made in the monitoring period. The monitoring period 410 has to be long enough for the UE 106 to collect enough samples to perform sufficient performance measurements 404. The monitoring period 410 can also be long enough for the UE 106 to perform any other relevant operations in relation to the performance measurements. The other relevant operations could comprise filtering of the measurements, or any other suitable operations.

As shown in Fig.4 there are multiple performance monitoring instances within the monitoring period 410. Delay requirements for the reporting of performance measurements can be defined based on the monitoring period 410.

Two different monitoring periods 410 are shown in Fig. 4. In the first example the monitoring period 410A is defined without an activation delay. In this example the monitoring period 410A comprises the time from the activation of the model 412 to the sending of the first monitoring report 406.

In the second example the monitoring period 410B is defined without an activation delay. In this example the monitoring period 410B comprises the activation delay 414 and also the time from the activation of the model 412 to the sending of the first monitoring report 406. The activation delay 414 is the time between the triggering of the activation of the functionality of the model and the actual activation of the functionality of the model.

The Monitoring period T_{_Mon_Period} can be given by T_{_Mon_Period}=A* T_{_Mon__RS_Period} where T_{_Mon__RS_Period} is the reporting periodicity 408 and A is a scaling factor. In some examples A can be equal to 1. In the example of Fig. 4 T_{_Mon__RS_Period} can be the periodicity of set A reference signals as the set A reference signals are used for the measurements and predictions. In other examples set B reference signals could be used and the periodicity of the set B signals would be used in the definition of T_{_Mon_Period}. This definition of T_{_Mon_Period} can be used in cases where the UE 106 reports measurements results and the network 100 evaluates the performance metric based on those results.

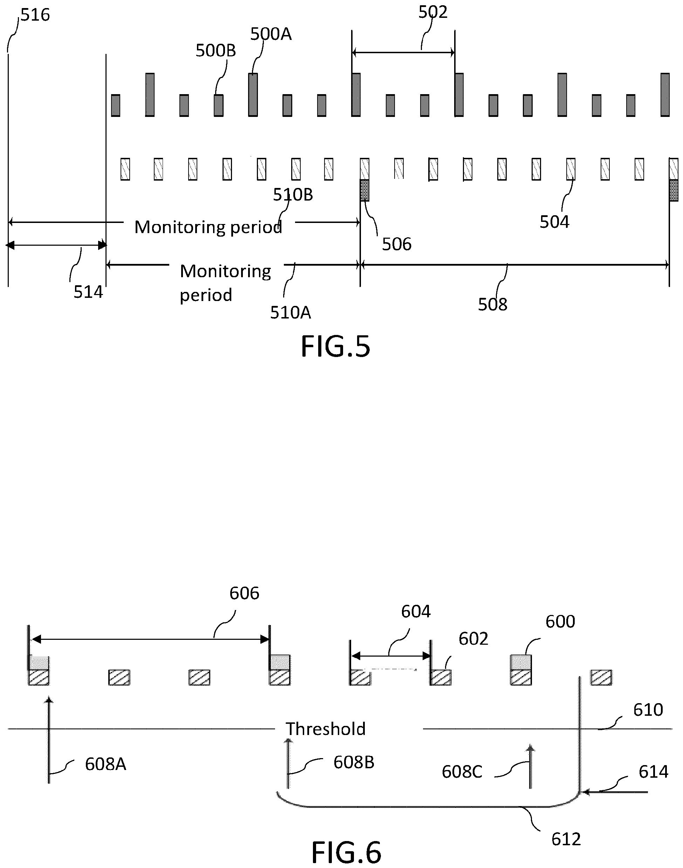

Fig. 5 schematically shows an example of a monitoring period in cases where a model such as an AI/ML model is used. In this example the UE 106 makes the performance measurements and then uses the performance measurements to calculate a monitoring metric. The UE 106 can then report the monitoring metric to the network 100. The network 100 could then use the reported monitoring metric, or any other suitable parameter to determine a performance metric. Based on the performance metric or other information obtained from the reported performance measurements the network 100 can make a decision such as selection of beams, activation of beams, deactivation of beans, switching of beams or falling back to legacy modes of beam selection or any other suitable decision. The network 100 could communicate any such decisions to the UE 106.

The monitoring is triggered at time 516. The monitoring can be triggered by the activation of a model, the indication of the RS, explicit monitoring activation or by any other suitable trigger.

As shown in Fig. 5 the performance measurements 504 are made at regular intervals. The performance measurements are made based on configured RS 500. The RS can be set A 500A or set B 500B. The time period between successive Set A RS 500A is the monitoring RS periodicity 502.

The performance measurements 504 can be made after each RS 500. The performance measurements 504 are made based on the RS 500.

A monitoring report 506 is sent from the UE 106 to the network 100. The monitoring report 506 can comprise a monitoring metric. The monitoring metric can be calculated based on the outputs of the performance measurements. The monitoring metric can therefor provide an indication of the accuracy of the model that is used or could provide an indication of the accuracy of the features or functionality of the model. The monitoring metric can be calculated based on multiple instances of the performance measurements 504. In some examples the monitoring metric could comprise prediction accuracy, L1-RSRP different or any other suitable metrics.

The UE 106 can be configured with monitoring metrics in RRC configuration or by any other suitable means.

The time period between successive monitoring reports 506 is the reporting periodicity 508.

Different examples of a monitoring period 510 are indicated in Fig. 5. The monitoring period T_{_Mon_Period} is the time interval over which the model is monitored and the performance measurements are made. The monitoring period 510 has to be long enough for the UE 106 to collect enough samples to perform sufficient performance measurements 504. The monitoring period 410 can also be long enough for the UE 106 to perform any other relevant operations in relation to the performance measurements. The other relevant operations could comprise filtering of the measurements, calculating the performance metric or any other suitable operations.

As shown in Fig. 5 there are multiple performance monitoring instances within the monitoring period 510. Delay requirements for the reporting of performance measurements can be defined based on the monitoring period 510.

Two different monitoring periods 510 are shown in Fig. 5. In the first example the monitoring period 510A is defined without an activation delay. In this example the monitoring period 510A comprises the time from the activation of the model 512 to the sending of the first monitoring report 506.

In the second example the monitoring period 510B is defined without an activation delay. In this example the monitoring period 510B comprises the activation delay 514 and also the time from the activation of the model 512 to the sending of the first monitoring report 506. The activation delay 514 is the time between the triggering of the activation of the model and the actual activation of the model.

In this example, where the UE 106 is arranged to determine a monitoring metric from the performance measurements, the monitoring period T_{_Mon_Period} can be given by T_{_Mon_Period}=B*W* T_{_Mon__RS_Period} where T_{_Mon__RS_Period} is the interval between successive RS and B is a scaling factor indicating the number of monitoring windows needed and W is the size of a monitoring window. The monitoring window is a defined interval that covers sufficient number of RS samples to enable the monitoring metric to be calculated. The scaling factor B can be 1. This definition of the monitoring period T_{_Mon_Period} can be used in examples where the monitoring metric is determined over a set of multiple samples.

In some examples T_{_Mon_Period} could be given by T_{_Mon_Period}= Mon*B*W* T_{_Mon__RS_Period}, where Mon is a scaling factor defining the periodicity of monitoring measurements. The scaling factor Mon can be 1. In some examples T_{_Mon_Period} could be given by T_{_Mon_Period}= Mon*B*W* T_{_Mon__RS_Period} + Delta. Delta is a fixed offset in time, that is not calculated as a certain number of T_{_Mon_Period}. For example, Delta could be an activation time or time needed to align the activation of monitoring (for example when signalling is received from the network) with the moment when the first monitoring RS is transmitted or when UE 106 can start measuring the monitoring RS.

In other examples the monitoring metric can be determined based on a single sample. In such cases the monitoring period T_{_Mon_Period} could be defined as described above in relation to Fig. 4.

In the examples shown in Figs. 4 and 5 the performance monitoring is performed based on a periodic CSI framework. That is the RS are transmitted periodically. It is also possible for the performance monitoring to be performed based on an aperiodic framework. In such cases the network 100 can provide the RS semi-persistently or periodically.

In these cases an example monitoring period T_{_Mon_Period} could be given by T_{_Mon_Period}=B * T_{_Mon_RS_Aperiod}, where T_{_Mon_RS_Aperiod} is the period of RS symbols configured for monitoring based on aperiodic CSI-framework, and B is a scaling factor. In some examples B can be equal to 1.

The examples could be implemented into networks 100 such as a 3GPP network as follows:

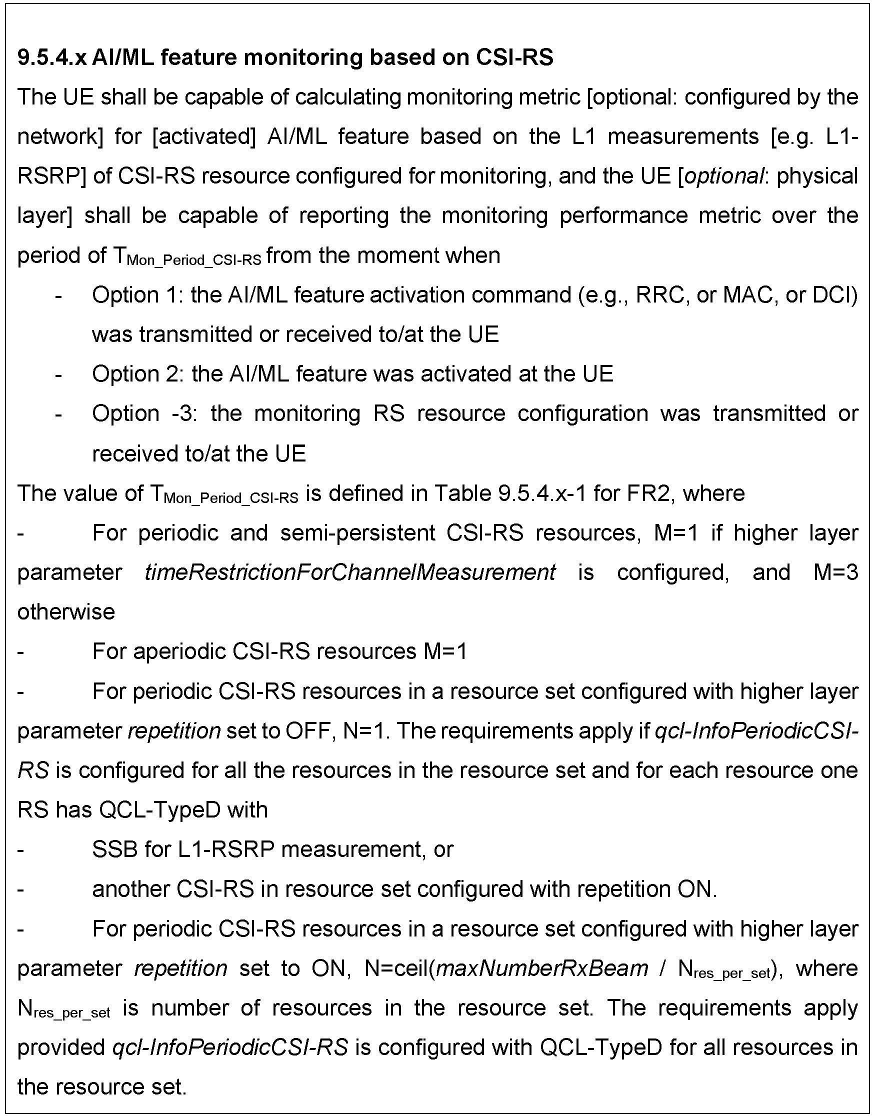

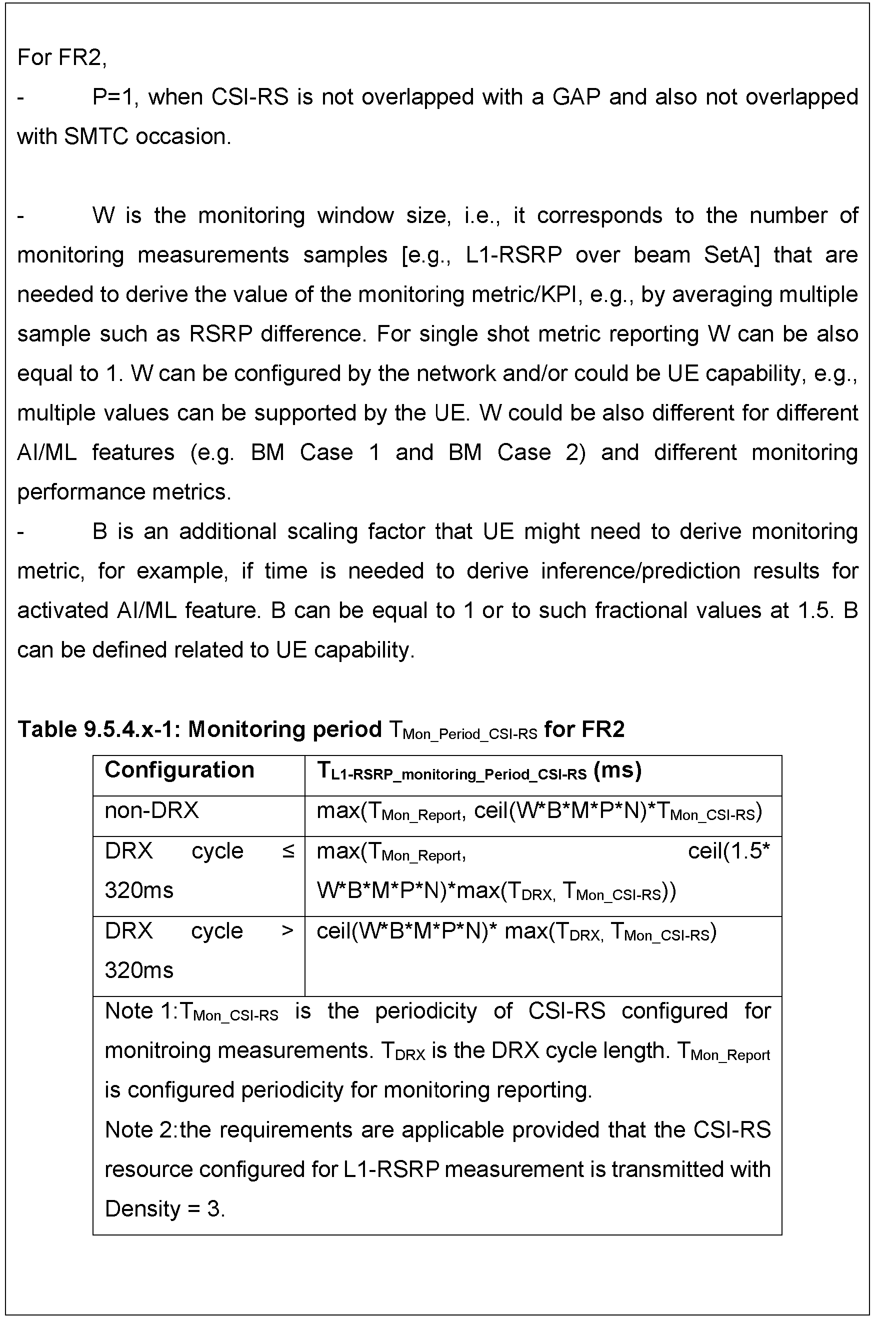

Fig. 6 schematically shows an example of event based reporting that could be used in examples of the disclosure. The event could be a failure in the model or in the functionality or features provided by the model. An event can be determined to have occurred based on the monitoring metric or based on a performance metric.

In the example of Fig. 6 the measurements comprise set B measurements 602 and set A-B measurements 600. The measurements are performed with a periodicity 604. The periodicity of the measurements 604 is determined by the periodicity of the RS signals.

A monitoring period 606 is indicated in Fig. 6. The monitoring period 606 is the time interval over which the model is monitored and the performance measurements are made. There are multiple performance measurements within the monitoring period 606.

In this example a monitoring metric 608 can be determined. The monitoring metric 608 can be determined based on the performance measurements. The monitoring metric 608 could comprise prediction accuracy, L1-RSRP different or any other suitable metrics.

The monitoring metric 608 can be calculated by the UE 106. The monitoring metric 608 could then be reported to the network 100 or higher protocol layers within the UE 106. In other examples the performance measurements can be reported to the network 100 and the network 100 can use the performance measurements to determine the monitoring metric 608.

In the example of Fig. 6 three instances of the monitoring metric 608 are shown. The First monitoring metric 608A is calculated at a first time and is above a threshold 610. A second monitoring metric 608B is calculated at a second time and is below the threshold 610. A third monitoring metric 608C is calculated at a third time and is also below the threshold 610.

In this case there are two monitoring metrics 608 that are below the threshold within an evaluation period 612. The evaluation period T_{eval_mon_out} is time period covering multiple measurement reports during which a performance metric is monitored. In this case the evaluation period 612 covers multiple instances of the monitoring metric 608. The multiple instances of the monitoring metric 608 can be used to determine a performance metric. For instance, if the there are multiple instances of the monitoring metric being below a threshold within the evaluation time period this can be determined as a performance metric dropping below a threshold. This can be identified as an event 614. This event 614 could be failure of the model or of the functionality or the features of the model. The occurrence of the event 614 should be reported. The occurrence of the event 614 should be reported within the evaluation time period.

In some examples the model could be turned off or switched to a different mode if the failure of the model or of the functionality or the features of the model is detected. Therefore, in examples of the disclosure the model could be turned off or switched to a different mode based on the reporting of the event 614. In some examples an indication of the reasons for the switch or turning off could be provided.

In some examples the network 100 can make the decision to deactivate functionality (CSI-ReportConfig) based on the information received from the UE 106. In other cases the UE 106 could make the decision to deactivate functionality (CSI-ReportConfig) by itself. In this regard, the UE 106 can report event corresponding to either deactivation of CSI-ReportConfig or to CSI-ReportConfig failure. Parameters in TS 38.133 can be used to represent the UE latency requirement on triggering and reporting of event-based functionality/model failure (CSI-ReportConfig failure) as *T*_{*eval*_*mon*_*out*} in Clause 8.x.y, when the monitoring metric gets below the specified or NW-configured threshold *Thₒᵤₜ*.

In the example of Fig. 6 the monitoring metric 608 is calculated in a one-shot manner. In other examples the monitoring metric 608 can be calculated based on multiple measurements.

The examples could be implemented into networks 100 such as a 3GPP network as follows:

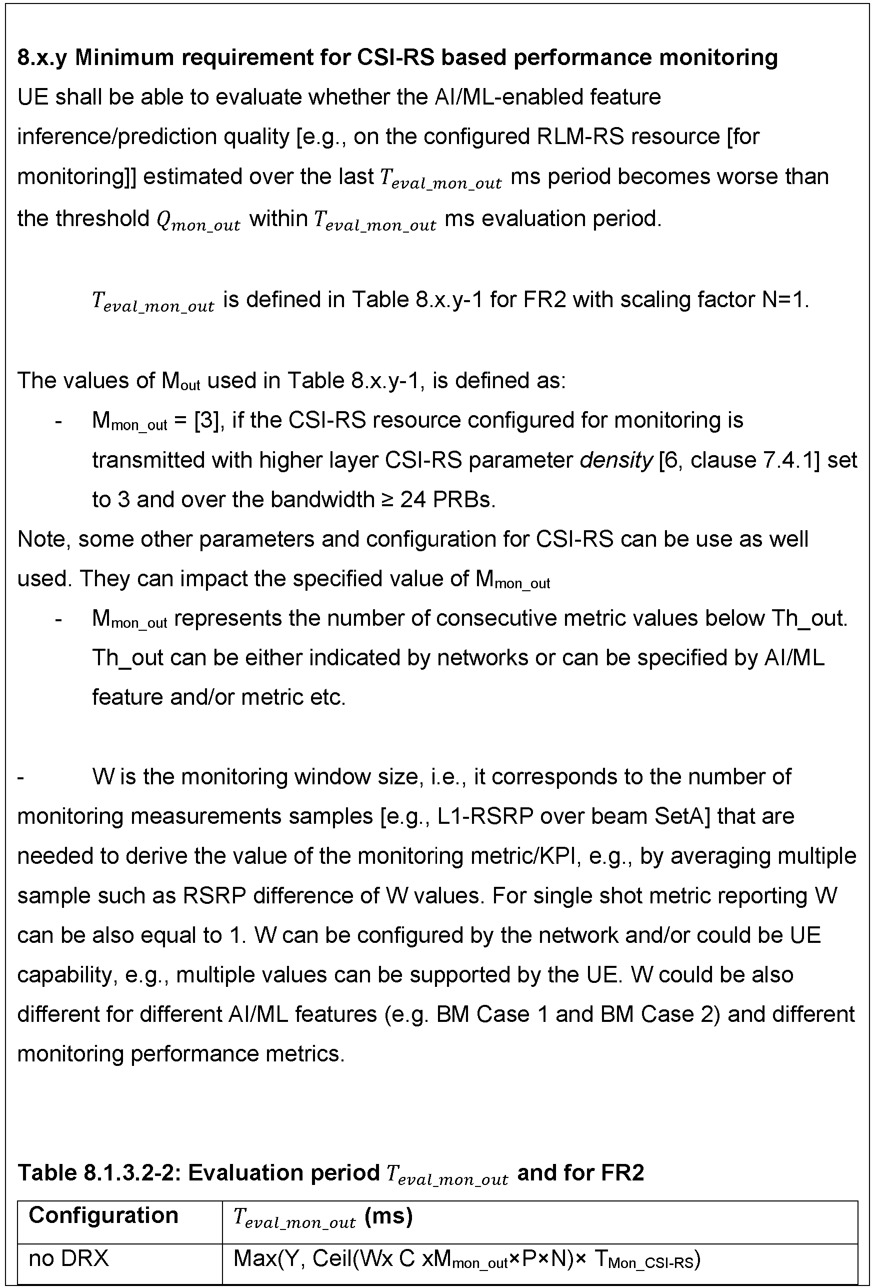

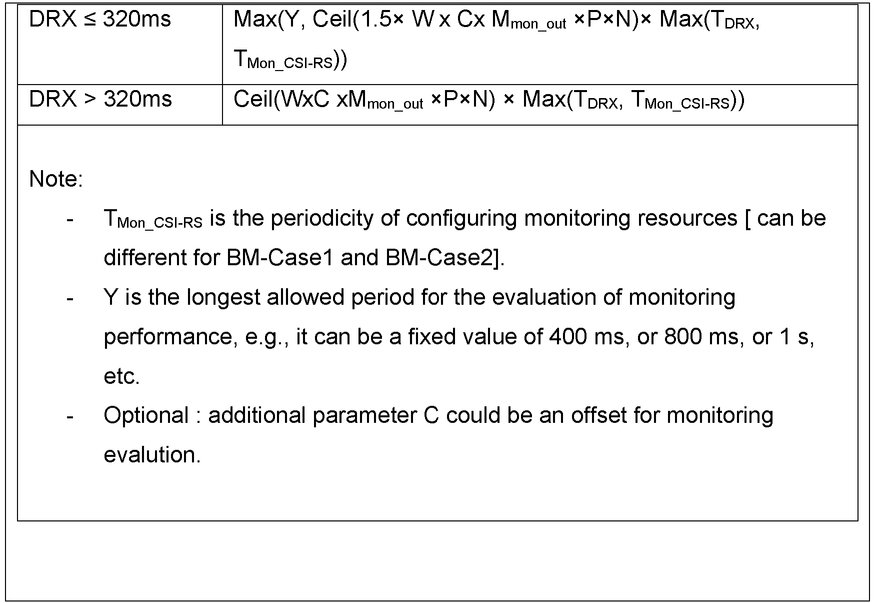

In some examples, T_{eval_mon_out} can be defined based on the T_{_Mon_CSI-RS}. In some examples T_{eval_mon_out} can be defined based on the periodicity of T_{_CS-RS} that are used for the measurements as the input for the inference (for example, SetB beams). For example, the UE 106 might be capable of evaluating the performance metric not only based on the monitoring reference signal measurements, but also based on the additional outputs of the model that indicated the accuracy/reliability of the prediction. In this case the UE 106 might be capable to evaluate the prediction quality more frequently than the periodicity of the resources/beams transmitted for monitoring.

In examples of the disclosure the evaluation of the performance metric or of the monitoring metric can be tested. For cases such as beam prediction, the UE 106 needs to measure a sufficient number of beams from SetB to provide the prediction for the whole SetA. If too many beams in SetB cannot be measured by UE 106, for example because of their lower power (that is, beam SNR < SNR_out), the quality of predictions of the model cannot be ensured. To enable the testing of the evaluation of the performance metric or of the monitoring metric all of the beams from SetB that are measured by the UE 106 can be used. The network can dynamically mute and unmute beams within set B so that at some point the UE 106 will not be able to get enough beams to perform the prediction. This would result in failure of the model. During the test the UE should detect the failure and report the failure of the model within the evaluation period. The failure of the model can be reported either with a dedicated report or using a (change in) applicability reporting of the model feature(s).

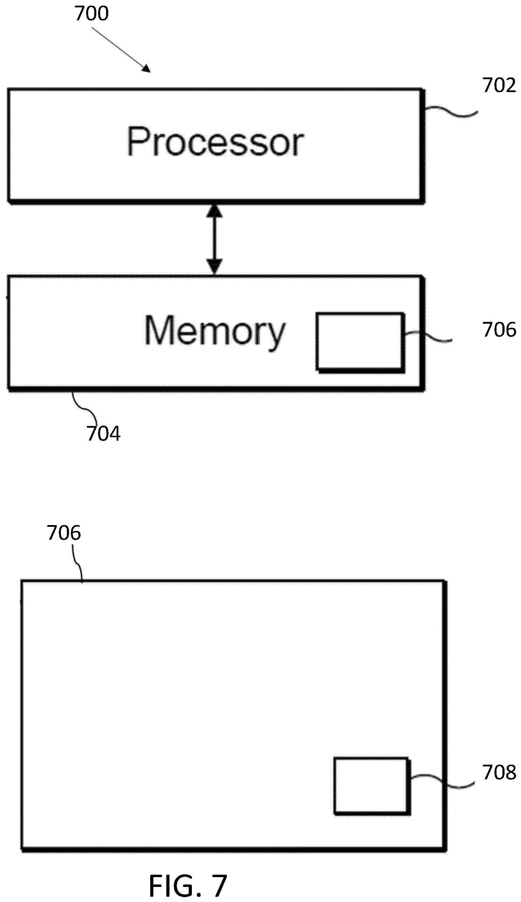

Fig. 7 shows an example controller 700. The controller 700 could be provided within a UE 106, or any other suitable entity. Implementation of the controller 700 may be as controller circuitry. The controller 700 may be implemented in hardware alone, have certain aspects in software including firmware alone or can be a combination of hardware and software (including firmware). The controller 700 can provide an apparatus for implementing the disclosure of could be provided as part of an apparatus that implements the disclosure.

As illustrated in Fig. 7 the controller 700 can be implemented using instructions that enable hardware functionality, for example, by using executable instructions of a computer program 706 in a general-purpose or special-purpose processor 702 that may be stored on a machine readable storage medium (disk, memory etc.) to be executed by such a processor 702.

The processor 702 is configured to read from and write to the memory 704. The processor 702 may also comprise an output interface via which data and/or commands are output by the processor 702 and an input interface via which data and/or commands are input to the processor 702.

The memory 704 stores instructions, program 706, or code that controls the operation of the apparatus when loaded into the processor 702. The instructions, program 706, or code provide the logic and routines that enables the apparatus to perform the methods illustrated in the Figs. The processor 702 by reading the memory 704 is able to load and execute the instructions, program 706, or code.

In some examples where the controller 700 is provided within an apparatus that controls a first radio subsystem, the controller therefore comprises means for:
performing 300 performance measurements for a model that is used for reference signal resource predictions wherein the measurements are performed based on configured reference signals and wherein the performance measurements are performed over a monitoring period; and
reporting 302 at least one output of the performance measurements wherein the output is reported within the monitoring period and the output of the performance measurements provide at least an indication of the accuracy of the model that is used for reference signal resource predictions.

The instructions, program 706, or code may arrive at the apparatus via any suitable delivery mechanism 708. The delivery mechanism 708 may be, for example, a machine-readable medium, a computer-readable medium, a non-transitory computer-readable storage medium, a computer program product, a memory device, a record medium such as a Compact Disc Read-Only Memory (CD-ROM) or a Digital Versatile Disc (DVD) or a solid-state memory, an article of manufacture that comprises or tangibly embodies the computer program 706. The delivery mechanism may be a signal configured to reliably transfer the computer program 706. The apparatus may propagate or transmit the computer program 706 as a computer data signal.

The term "non-transitory" as used herein, is a limitation of the medium itself that is, tangible, not a signal ) as opposed to a limitation on data storage persistency (for example, RAM vs. ROM).

The computer program 706 can comprise computer program instructions for causing an apparatus to perform at least the following or for performing at least the following:
performing 300 performance measurements for a model that is used for reference signal resource predictions wherein the measurements are performed based on configured reference signals and wherein the performance measurements are performed over a monitoring period; and
reporting 302 at least one output of the performance measurements wherein the output is reported within the monitoring period and the output of the performance measurements provide at least an indication of the accuracy of the model that is used for reference signal resource predictions.

The computer program instructions may be comprised in a computer program, a non-transitory computer readable medium, a computer program product, a machine-readable medium. In some but not necessarily all examples, the computer program instructions may be distributed over more than one computer program.

Although the memory 704 is illustrated as a single component/circuitry it may be implemented as one or more separate components/circuitry some or all of which may be integrated/removable and/or may provide permanent/semi-permanent/ dynamic/cached storage.

Although the processor 702 is illustrated as a single component/circuitry it may be implemented as one or more separate components/circuitry some or all of which may be integrated/removable. The processor 702 may be a single core or multi-core processor.

References to "computer-readable storage medium", "computer program product", "tangibly embodied computer program" etc. or a "controller", "computer", "processor" etc. should be understood to encompass not only computers having different architectures such as single /multi- processor architectures and sequential (Von Neumann)/parallel architectures but also specialized circuits such as field-programmable gate arrays (FPGA), application specific circuits (ASIC), signal processing devices and other processing circuitry including quantum processing circuitry. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

As used in this application, the term "circuitry" can refer to one or more or all of the following:
(a) hardware-only circuitry implementations (such as implementations in only analog and/or digital circuitry) and
(b) combinations of hardware circuits and software, such as (as applicable):
   (i) a combination of analog, digital and/or quantum hardware circuit(s) with software/firmware and
   (ii) any or all portions of hardware processor(s) (including digital and/or quantum processor(s)) with software, and memory(ies) that work together to cause an apparatus, such as a mobile device, computing device or server, to perform various functions and
(c) any or all portions of hardware circuit(s) such as a microprocessor(s) and/or quantum processor(s) that requires software (for example, firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the claim element, a baseband integrated circuit or processor integrated circuit for a mobile device or a similar integrated circuit in a server, a cellular network device, or other computing or network device.

The blocks illustrated in the Figs. can represent steps in a method and/or sections of code in the computer program 706. The illustration of a particular order to the blocks does not necessarily imply that there is a required or preferred order for the blocks and the order and arrangement of the block can be varied. Furthermore, it can be possible for some blocks to be omitted.

Where a structural feature has been described, it may be replaced by means for performing one or more of the functions of the structural feature whether that function or those functions are explicitly or implicitly described.

The above-described examples find application as enabling components of:
automotive systems; telecommunication systems; electronic systems including consumer electronic products; distributed computing systems; media systems for generating or rendering media content including audio, visual and audio visual content and mixed, mediated, virtual and/or augmented reality; personal systems including personal health systems or personal fitness systems; navigation systems; user interfaces also known as human machine interfaces; networks including cellular, non-cellular, and optical networks; ad-hoc networks; the internet; the internet of things; virtualized networks; and related software and services.

The apparatus can be provided in an electronic device, for example, a mobile terminal, according to an example of the present disclosure. It should be understood, however, that a mobile terminal is merely illustrative of an electronic device that would benefit from examples of implementations of the present disclosure and, therefore, should not be taken to limit the scope of the present disclosure to the same. While in certain implementation examples, the apparatus can be provided in a mobile terminal, other types of electronic devices, such as, but not limited to: mobile communication devices, hand portable electronic devices, wearable computing devices, portable digital assistants (PDAs), pagers, mobile computers, desktop computers, televisions, gaming devices, laptop computers, cameras, video recorders, GPS devices and other types of electronic systems, can readily employ examples of the present disclosure. Furthermore, devices can readily employ examples of the present disclosure regardless of their intent to provide mobility.

The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to comprising only one...' or by using 'consisting.'

In this description, the wording 'connect', 'couple' and 'communication' and their derivatives mean operationally connected/coupled/in communication. It should be appreciated that any number or combination of intervening components can exist (including no intervening components), i.e., to provide direct or indirect connection/coupling/communication. Any such intervening components can include hardware and/or software components.

As used herein, the term "determine/determining" (and grammatical variants thereof) can include, not least: calculating, computing, processing, deriving, measuring, investigating, identifying, looking up (for example, looking up in a table, a database, or another data structure), ascertaining and the like. Also, "determining" can include receiving (for example, receiving information), accessing (for example, accessing data in a memory), obtaining and the like. Also, " determine/determining" can include resolving, selecting, choosing, establishing, and the like.

In this description, reference has been made to various examples. The description of features or functions in relation to an example indicates that those features or functions are present in that example. The use of the term 'example' or 'for example' or 'can' or 'may' in the text denotes, whether explicitly stated or not, that such features or functions are present in at least the described example, whether described as an example or not, and that they can be, but are not necessarily, present in some of or all other examples. Thus 'example', 'for example', 'can', or 'may' refers to a particular instance in a class of examples. A property of the instance can be a property of only that instance or a property of the class or a property of a sub-class of the class that includes some but not all the instances in the class. It is therefore implicitly disclosed that a feature described with reference to one example but not with reference to another example, can where possible be used in that other example as part of a working combination but does not necessarily have to be used in that other example.

As used herein, "at least one of the following: " and "at least one of " and similar wording, where the list of two or more elements are joined by "and" or "or" mean at least any one of the elements, or at least any two or more of the elements, or at least all the elements.

Although examples have been described in the preceding paragraphs with reference to various examples, it should be appreciated that modifications to the examples given can be made without departing from the scope of the claims.

Features described in the preceding description may be used in combinations other than the combinations explicitly described above.

Although functions have been described with reference to certain features, those functions may be performable by other features whether described or not.

The description of a feature, such as an apparatus or a component of an apparatus, configured to perform a function, or for performing a function, should additionally be considered to also disclose a method of performing that function. For example, description of an apparatus configured to perform one or more actions, or for performing one or more actions, should additionally be considered to disclose a method of performing those one or more actions with or without the apparatus.

Although features have been described with reference to certain examples, those features may also be present in other examples whether described or not.

The term 'a', 'an' or `the' is used in this document with an inclusive not an exclusive meaning. That is any reference to X comprising a/an/the Y indicates that X may comprise only one Y or may comprise more than one Y unless the context clearly indicates the contrary. If it is intended to use 'a', 'an' or `the' with an exclusive meaning then it will be made clear in the context. In some circumstances the use of 'at least one' or `one or more' may be used to emphasis an inclusive meaning but the absence of these terms should not be taken to infer any exclusive meaning.

The presence of a feature (or combination of features) in a claim is a reference to that feature or (combination of features) itself and to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

In this description, reference has been made to various examples using adjectives or adjectival phrases to describe characteristics of the examples. Such a description of a characteristic in relation to an example indicates that the characteristic is present in some examples exactly as described and is present in other examples substantially as described.

As used herein, the terms "the at least one" and "the one or more" mean "any one of the at least one" and "any one of the one or mor" respectively.

The above description describes some examples of the present disclosure however those of ordinary skill in the art will be aware of possible alternative structures and method features which offer equivalent functionality to the specific examples of such structures and features described herein above and which for the sake of brevity and clarity have been omitted from the above description. Nonetheless, the above description should be read as implicitly including reference to such alternative structures and method features which provide equivalent functionality unless such alternative structures or method features are explicitly excluded in the above description of the examples of the present disclosure.

Whilst endeavoring in the foregoing specification to draw attention to those features believed to be of importance the Applicant may seek protection via the claims in respect of any patentable feature or combination of features hereinbefore referred to and/or shown in the drawings whether or not emphasis has been placed thereon.

## Claims

1. An apparatus comprising:
at least one processor;
and at least one memory storing instructions that, when executed by the at least one processor, cause the apparatus to perform at least:
performing performance measurements for a model that is used for reference signal resource predictions wherein the measurements are performed based on configured reference signals and wherein the performance measurements are performed over a monitoring period; and
reporting at least one output of the performance measurements wherein the output is reported within the monitoring period and the output of the performance measurements provide at least an indication of the accuracy of the model that is used for reference signal resource predictions.

2. The apparatus of claim 1 wherein the configured reference signals comprise at least one of:
Channel state information (CSI) - reference signals
Synchronization signal blocks (SSB).

3. The apparatus of any preceding claim wherein the performance measurements comprise layer 1 -reference signal received power (L1-RSRP) measurements.

4. The apparatus of any preceding claim wherein the at least one processor and at least one memory are also configured to cause the apparatus to perform calculating at least one monitoring metric based on the configured reference signals.

5. The apparatus of claim 4 wherein the at least one monitoring metric comprises at least one of:
prediction accuracy;
L1-RSRP difference.

6. The apparatus of any of claims 4 to 5 wherein the reporting of at least one output of the performance measurements comprises reporting the at least one monitoring metric.

7. The apparatus of claims 4 to 6 wherein the at least one processor and at least one memory are also configured to cause the apparatus to perform determining an occurrence of an event based on the monitoring metric and reporting the occurrence of the event within the monitoring period.

8. The apparatus of any preceding claim wherein the at least one processor and at least one memory are also configured to cause the apparatus to perform evaluating whether a performance metric of the model used for reference signal resource prediction falls below a threshold within an evaluation time period.

9. The apparatus of claim 8 wherein the at least one processor and at least one memory are also configured to cause the apparatus to perform notifying higher protocol layers within the apparatus if the performance metric falls below the threshold in the evaluation time period and wherein the notification is made within the evaluation time period.

10. The apparatus of claim 9 wherein the at least one processor and at least one memory are also configured to cause the apparatus perform controlling reference signal resource selection based on the notification.

11. The apparatus of claim 8 wherein the at least one processor and at least one memory are also configured to cause the apparatus to perform sending the output of the performance measurements to a network entity to enable the network entity to perform evaluating whether a performance metric of the model used for reference signal resource prediction falls below a threshold within an evaluation time period.

12. The apparatus of claims 8 to 11 wherein the evaluation of the performance metric is performed based at least on an output of the model and the configured reference signals.

13. The apparatus of any preceding claim wherein one or more reference signal resources are dynamically muted and unmuted to enable testing of the evaluation of the performance metric.

14. The apparatus of any preceding claim wherein the reference signal resource predictions comprise beam predictions.

15. A method comprising:
performing performance measurements for a model that is used for reference signal resource predictions wherein the measurements are performed based on configured reference signals and wherein the performance measurements are performed over a monitoring period; and
reporting at least one output of the performance measurements wherein the output is reported within the monitoring period and the output of the performance measurements provide at least an indication of the accuracy of the model that is used for reference signal resource predictions.
